Europäisches Patentamt

European Patent Office

Office européen des brevets

(19)

(11) Publication number: 0 322 905
A2

(12) **EUROPEAN PATENT APPLICATION**

(21) Application number: 88121813.5

(51) Int. Cl.⁴: **C08F 8/30**

(22) Date of filing: **28.12.88**

(30) Priority: **29.12.87 IT 2324287**

(43) Date of publication of application:
**05.07.89 Bulletin 89/27**

(84) Designated Contracting States:
**BE DE ES FR GB NL**

(71) Applicant: **MONTEDIPE S.p.A.**
**31, Foro Buonaparte**
**I-20121 Milan(IT)**

(72) Inventor: **Canova, Luciano**
**7, via Marsala**
**I-29100 Novara(IT)**
Inventor: **Giannini, Umberto**
**53, via Sismondi**
**I-20100 Milan(IT)**
Inventor: **Albizzati, Enrico**
**64 via Rona**
**I-28041 Arona Novara(IT)**
Inventor: **Borghi, Italo**
**49, via Aldighieri**
**I-44100 Ferrara(IT)**
Inventor: **Proto, Antonio**
**33, via Orelli**
**I-28100 Novara(IT)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40(DE)**

(54) **Process for the imidization of copolymers of maleic anhydride and vinyl-aromatic monomers.**

(57) The invention relates to a process for the imidization of copolymers of maleic anhydride and vinyl-aromatic monomers using urea or an urea derivative as the imidizing agent.

EP 0 322 905 A2

# PROCESS FOR THE IMIDIZATION OF COPOLYMERS OF MALEIC ANHYDRIDE AND VINYL-AROMATIC MONOMERS

The invention relates to a process for imidizing copolymers of maleic anhydride and vinyl-aromatic monomers, in particular styrene, and optionally other monomers.

The above copolymers are known, for instance, from US-A-3,954,722; another patent (US-A-4,167,543) describes the addition of acrylonitrile as a third monomer. Said copolymers, marketed, for instance, by the ARCO Company under the trade mark 'DYLARC', may be processed with the application of heat, but when they are blended with other polymeric products at high temperatures (in order to obtain, for example, an impact-resistant material) there are observed decomposition reactions as well as the formation of surface blisters and cross-linking.

Thus, processing is extremely difficult and the surface appearance of the resulting products may be unacceptable. If the maleic anhydride is replaced by the corresponding imide, as described in GB-A-1,185,544, these drawbacks can be avoided and there are processes which allow to obtain these copolymers starting from a preformed maleic imide monomer, whereby substantially equimolar copolymers (styrene: imide = 1:1 by mols) or non-equimolar copolymers (with an imide content lower than 50% by mols) are obtained. However, the maleic imide is not easily available and its synthesis is quite troublesome and complicated.

Alternatively, US-A-3,651,171; 3,840,499, 4,381,373 and DE-A-3 430 802 teach to imidize a preformed copolymer in the presence of water. Moreover, US-A-4,404,322 discloses that the imidization with amines (which are known to be very expensive) may be carried out either in the molten state or in an organic solvent. The contents of all the publications referred to above are an integral part of the present description and are incorporated herein. The imidized copolymers thus obtained have a much higher glass transition temperature (Tg, defined below), as compared to the non-imidized copolymers. It has now been found that there is a much simpler and more economical process which allows to obtain imidized copolymers which are equivalent and sometimes superior in quality.

In its broadest aspect, the present invention relates to a process for imidizing copolymers of maleic anhydride and vinyl-aromatic monomers, and optionally other comonomers, using urea and/or an urea derivative as the imidizing agent, the imidization being achieved by maintaining the reaction mixture in the molten state, or alternatively by working in the presence or organic solvents for the copolymers, such as e.g. aromatic hydrocarbons, ketones and the like; it is advisable to work in the anhydrous state, that is, in the absence of water.

The amount of said imidizing agent may vary from 1 to 300 mols (preferably from 5 to 250 mols) per 100 mols of anhydride groups present in the copolymer.

The imidization can advantageously be performed in the presence of an imidization catalyst; the amount of said catalyst may range from 0.0001 to 100 mols (preferably 0.01 to 10 mols) per 100 mols of anhydride groups present in the copolymer.

The initial copolymer to be imidized may contain from 5 to 50%, preferably from 10% to 50% (by mols), of maleic anhydride.

Examples of vinyl-aromatic compounds suitable as comonomers of maleic anhydride are styrene, alpha-methyl-styrene, p-methyl-styrene, p-tert.-butyl-styrene, ortho-or para-chlorostyrene, etc. Moreover, there may be present other comonomers belonging to the class of unsaturated olefinic monomers, such as e.g., acrylo-nitrile, vinyl chloride, vinylidene fluoride or chloride, vinyl acetate, olefins, vinylethers, diolefins, halogenated (e.g. fluorinated and/or chlorinated) diolefins (such as chloroprene), etc. The basic copolymers may contain an elastomeric phase of any type which enhances the impact-resistance.

Examples of urea compounds suitable as imidizing agents are those having the following formula: $RHN-CO-NHR'$ wherein $R$ and $R'$, which are either the same or different from each other, represent hydrogen, $NH_2CO-$ or alkyl, cycloalkyl, aryl or heterocyclic groups (optionally substituted) having from 1 to 18, preferably 1 to 8, carbon atoms.

The term "alkyl" also includes aryl-alkyl, cycloalkyl-alkyl and alkyl groups having one or more heterocyclic substitutents attached thereto; "aryl" also includes alkylaryl, cycloalkyl-aryl and aryl groups having one or more heterocyclic substituents attached thereto; "cycloalkyl" includes alkyl-cycloalkyl, aryl-cycloalkyl and cycloalkyl groups having one or more heterocyclic substituents attached thereto; "heterocyclic group" is meant to include alkyl-, cycloalkyl-, aryl-, alkoxy- or carboxy-heterocyclic groups.

Preferred groups $R$ and $R'$ are:
alkyl groups having from 1 to 8 carbon atoms, such as e.g., methyl, ethyl, n- and i-propyl, n-, i-, sek- and tert.-butyl, pentyl, hexyl, heptyl, octyl and 2-ethylhexyl; aryl-alkyl groups having 7 to 12 carbon atoms, such as e.g., benzyl, 1- and 2-phenethyl and phenylpropyl;

cycloalkyl-alkyl groups having 4 to 12 carbon atoms, such as e.g., cyclopentyl- or cyclohexyl-methyl, -ethyl and -propyl; cycloalkyl groups having 3 to 8 carbon atoms, such as e.g., cyclopropyl, cyclobutyl, cyclopentyl, cyclohexyl and cyclooctyl;

alkyl-cycloalkyl groups having 4 to 12 carbon atoms, such as e.g., methyl-, dimethyl-, ethyl- or propyl-cyclopentyl or -cyclohexyl;

aryl-cycloalkyl groups having 9 to 15 carbon atoms, such as e.g., phenyl-cyclopentyl or -cyclohexyl;

aryl groups having 6 to 14 carbon atoms, such as e.g., phenyl, naphthyl, biphenylyl and anthracenyl;

alkyl-aryl groups having 7 to 16 carbon atoms, such as e.g., tolyl, xylyl, ethylphenyl, cumyl and butylphenyl; cycloalkyl-aryl groups having 9 to 15 carbon atoms, such as e.g., cyclopentyl- or cyclohexyl-phenyl.

Heterocyclic substituents which may be attached to the alkyl, cycloalkyl and aryl groups preferably have 5 to 7 ring atoms, 1 to 3 of which are selected from one or more of N, O and S atoms. Such substituents are, for instance, pyrrolyl, furanyl, thienyl, pyridinyl, pyranyl, thiazolyl, oxazolyl, pyrazolyl, pyrimidinyl, pyridazinyl and the partially or completely saturated derivatives thereof. The above mentioned (cyclo)aliphatic and aromatic groups may have one or more substituents, such as e.g. halogen atoms (particularly F, Cl and Br), $C_{1-4}$-alkoxy groups, hydroxy, optionally mono- or disubstituted amino, $NO_2$, CN, carboxy and alkoxycarbonyl having 2 to 6 carbon atoms.

For purely exemplifying purposes, urea, dimethyl-urea, propyl-urea, di-butyl-urea, di-cyclo-hexyl-urea, phenyl-urea, di-phenyl-urea and biuret may be mentioned as suitable urea compounds.

The imidized copolymers prepared according to the process of the present invention show an excellent stability to heat (thermal stability) (TLS) and preferably have more than 5% by mols of imide units. From the spectrophotometric infrared (IR) analysis, it can be concluded that these imide units are of the cyclic type, although this structure is not mandatory for the purposes of this invention.

The imidization reaction may be conducted by reacting a styrene-maleic anhydride copolymer with the imidization agent at a high temperature. The most commonly used reaction temperatures range from 100° to 350° C, preferably from 120° to 280° C). The reaction may be carried out at subatmospheric pressure as well as at a higher pressures.

The catalyst preferably used in the process of this invention may be selected e.g. from Lewis acids, strong Broensted acids, salts of said strong Broensted acids and mixtures thereof. "Strong" Broensted acids are those which show a pK equal to or lower than 5, preferably below 3.

As examples of suitable Lewis acids there may be cited zinc chloride, boron fluoride, aluminum chloride and aluminum bromide, the tin and titanium tetrachlorides, antimony pentachloride and antimony pentafluoride ($ZnCl_2$, $BF_3$, $AlCl_3$, $AlBr_3$, $SnCl_4$, $TiCl_4$, $SbCl_5$, $SbF_5$); triphenyl-boron and triphenoxy-boron may also be mentioned.

Examples of suitable Broensted strong acids and salts thereof, are hydrochloric acid, fluoroboric acid, fluoro sulphonic acid, trifluoromethylsulphonic acid ($CF_3$-$SO_3$-H), benzenesulphonic acid and the alkyl-benzenesulphonic acids (with alkyl groups containing from 1 to 12 carbon atoms), as well as the corresponding alkali metal (e.g. Li, Na and K) and ammonium salts; particularly preferred salts are ammonium chloride and ammonium fluoroborate ($NH_4BF_4$).

According to a particular embodiment of the present invention, the reaction between the basic copolymer and the imidization agent is carried out in an extruder, a mixer or any other similar apparatus, provided with degassing devices, described in detail in e.g. DE-A-3 430 802.

The copolymers imidized according to the invention can be processed in accordance with common thermoplastic polymer technologies, such as e.g., extrusion molding, injection molding and thermoforming, and they may be used for the manufacture of shaped articles of any form and size. Moreover, these polymers may be used in the preparation of plates (sheets), shaped or drawn articles, films, pipes, filaments, etc. The imidized copolymers may be blended with suitable additives such as for example products that improve resilience, reinforcing fibers (of glass, carbon, etc.), mineral fillers, fire-retardants, stabilizers, lubricants, plasticizers, etc. Blowing or swelling agents (chloro-fluoro-hydrocarbons, azo-dicarbonamide, etc.) may also be added. They may be employed in expanded form, possibly mixed with said fibers (of glass, carbon, etc.) and/or with other inorganic reinforcing materials or fillers, resulting in products of low density and with excellent physical properties, in particular a high glass-transition temperature (Tg).

The glass-transition temperature (Tg) may be determined by using a differential calorimeter; it is the temperature corresponding to the inflection point which appears on the thermogram when the thermal capacity changes abruptly; a rate of increase of temperature of 20° C/minute is employed and the measurement is carried out after first heating the polymers to 200° C and subsequently cooling it down. The quality of the imidized copolymers may be evaluated even better by means of a thermogravimetric (TGA)

3

analysis, by gradually raising the temperature (at a rate of 20° C/min. and under a nitrogen atmosphere) and by continuously recording the decrease in weight of the sample.

The following parameters are considered to be of importance:

a) the TGA loss, that is the weight percentage of the sample being lost, following its heating under a nitrogen atmosphere between 50° and 300° C;

b) the stability limit temperature (TLS), that is the temperature corresponding to a TGA loss of 5%.

The following examples are given for purely illustrative purposes and shall not be contrued as to limit the scope of the invention.

EXAMPLE 1:

A glass reactor, equipped with a stirrer and a gas vent for exhausting the volatile components, was simultaneously charged, under a nitrogen atmosphere, with 40 grams of a copolymer containing 89.8% by weight of styrene and 10.2% by weight of maleic anhydride having a glass transition-temperature of 119.1° C, a TGA of 0.52%, a TLS of 365° C and an inherent viscosity (in THF at 30° C; concentration 0.25% by weight) of 0.82 dl/g, and 5 g of urea.

This reaction mixture was gradually heated to the melting point and successively heated to 215° C, while removing the volatile products formed during the reaction. The reaction was continued by gradually raising the temperature from 215° C to 235° C (within 1 hour), then maintaining the temperature at 235° C for 3 hours, and finally cooling the mixture down under a nitrogen atmosphere. The crude reaction product was then diluted with 100 ml of tetrahydrofuran, whereby a solution was obtained from which the polymer was recovered by coagulation with methanol. The thus imidized copolymer was filtered and dried under vacuum at 115° C. The resulting copolymer had an inherent viscosity (in THF at 30° C) of 0.82 dl/g, a TLS of 380° C and a glass transition-temperature (Tg) of 123.4° C. Moreover, said copolymer, when subjected to thermogravimetric analysis (TGA), with a temperature increase rate of 20° C/min, under a nitrogen atmosphere, showed a weight loss of 0.65% (within the temperature range from 50° C to 300° C).

EXAMPLE 2:

The reactor of Example 1 was simultaneously charged, under a nitrogen atmosphere, with 40 g of a copolymer containing 76.1% by weight of styrene and 23.9% by weight of maleic anhydride having a glass transition-temperature of 145.6° C and an inherent viscosity of 0.53 dl/g, and 12 g of urea. This reaction mixture was then gradually heated to the melting point and thereafter to 220° C, while removing the volatile products from the reaction mixture. The reaction was then continued by gradually raising the temperature from 220° C to 250° C (within 0.5 hours). The temperature was maintained at 250° C for 70 minutes and then the mixture was cooled down under a nitrogen atmosphere. Thereafter, the crude reaction product was diluted with 100 ml of tetrahydrofuran, whereby a solution was obtained from which the polymer was isolated by coagulation with methanol. Thereupon, the imidized copolymer was filtered and dried under vacuum at 115° C. The results obtained thereby are given in TABLE I.

EXAMPLE 3:

Example 2 was repeated, except that 1.5 g of NH4Cl were added to the urea and that the heating was continued for another 60 minutes at a temperature of 275° C. The data and results are reported in TABLE I.

EXAMPLE 4:

Example 2 was repeated, but adding to the urea 1.5 g of ammonium fluoroborate (NH4BF4) and continuing the heating for another 2 hours (at 250° C). The obtained results are reported in TABLE 1.

4

TABLE I

| CHARACTERISTICS OF IMIDIZED COPOLYMERS | | | | |
|---|---|---|---|---|
| E X A M P L E (imidization agent) | Tg (°C) | TGA Loss (% by weight) | TLS (°C) | Inherent viscosity (dl/g) |
| Basic COPOLYMER | 145.6 | 0.85 | 352 | 0.53 |
| EX 2 (urea) | 170.5 | 0.77 | 370 | 0.52 |
| EX 3 (urea + NH₄Cl) | 169.0 | 0.79 | 375 | 0.50 |
| EX 4 (urea + NH₄BF₄) | 168.5 | 0.52 | 385 | 0.51 |

EXAMPLE 5:

Example 2 was repeated, replacing urea by 20 g of biuret and adding 1.5 g of ammonium fluoroborate (NH₄BF₄); the obtained results are reported in TABLE II.

EXAMPLE 6:

Example 2 was repeated, replacing urea by 17.2 g of N,N'-dimethyl-urea. The obtained results are reported in TABLE II.

EXAMPLE 7:

Example 6 was repeated, but adding also 1.5 g of ammonium fluoroborate (NH₄BF₄). The obtained results are reported in TABLE II.

EXAMPLE 8:

Example 2 was repeated using the same reactor and the same initial (starting) copolymer, but working in an organic solvent, consisting of a mixture of xylenes, and varying the working conditions. The reactor was simultaneously charged, under a nitrogen atmosphere, with 30 g of the copolymer to be imidized, 8.8 g of urea and 25 ml of a commercial mixture of xylenes. This reaction mixture was then gradually heated until the copolymer had completely dissolved (at 123°C); the temperature was raised, within 90 minutes, to 130°C and the mixture was then allowed to react at this temperature for 3 hours; finally the reaction mixture was cooled down under a nitrogen atmosphere.

Thereupon, the crude reaction product was diluted with 100 ml of tetrahydrofuran, whereby a solution was obtained from which the polymer was isolated by precipitation with methanol, filtering and drying at 115°C, under vacuum. The obtained results are reported in TABLE II.

EXAMPLE 9:

Example 8 was repeated, operating in solution and varying the working conditions.
20 g of polymer, 6 g of urea, 1.5 g of ZnCl₂, and 40 ml of commercial cyclohexanone, were simultaneously introduced into the reactor. The temperature was raised, within 2 hours, to 170°C and was then maintained constant for additional 4 hours, collecting the volatile components that had formed during the reaction. The polymer was then isolated as in Example 8. The obtained results are given in TABLE 11.

TABLE II

| CHARACTERISITICS OF THE IMIDIZED COPOLYMER | | | | |
|---|---|---|---|---|
| E X A M P L E (imidizing agent) | Tg ($^\circ$C) | TGA LOSS (% b. w.) | TLS ($^\circ$C) | Inherent viscosity (dl/g) |
| EX 5 (biuret + $NH_4BF_4$) | 163 | 0.69 | 365 | 0.61 |
| EX 6 (N,N$'$-dimethyl-urea) | 145 | 0.80 | 380 | 0.55 |
| EX 7 (N,N$'$-dimethyl-urea + $NH_4BF_4$) | 145.5 | 0.73 | 385 | 0.58 |
| EX 8 (urea + xylenes) | 153.2 | 0.80 | 390 | 0.54 |
| EX 9 (urea + cyclohexanone + $ZnCl_2$) | 180 | 0.90 | 386 | 0.57 |

## Claims

1. Process for imidizing copolymers of maleic anhydride and vinyl-aromatic monomers, and optionally other monomers, charactized by the use of urea and/or an urea derivative as imidizing agent.

2. Process according to claim 1, wherein the imidization is carried out while the reaction mixture is in the molten state.

3. Process according to claim 1, wherein the imidization is carried out in the presence of an organic solvent, particularly an aromatic hydrocarbon, e.g. a xylene or a mixture of xylenes, or a ketone, e.g. cyclohexanone.

4. Process according to anyone of the preceding claims, wherein the amount of imidizing agent ranges from 1 to 300 mols, particularly from 5 to 250 mols, per 100 mols of anydride groups to be imidized.

5. Process according to anyone of the preceding claims, wherein the copolymer to be imidized contains from 5 to 50%, particularly from 10 to 50% by mols, of maleic anhydride units.

6. Process according to anyone of the preceding claims, wherein the imidization is carried out in the presence of a catalyst, the amount of catalyst ranging from 0.0001 to 100 mols, particularly from 0.01 to 10 mols, per 100 mols of anhydride groups present in the polymer.

7. Process according to anyone of the preceding claims, wherein the vinyl-aromatic monomer is selected from styrene, alpha-methyl-styrene, para-methyl-styrene, p-tert.-butyl-styrene, o- and p-chloro-styrene,and mixtures thereof.

8. Process according to anyone of the preceding claims, wherein the copolymer to be imidized contains, besides vinyl-aromatic monomers, one or more olefinic monomers selected from acrylonitrile, vinyl chloride, vinylidene fluoride, vinyl acetate, olefins, vinyl ethers, diolefins and halogenated diolefins.

9. Process according to anyone of the preceding claims, wherein the copolymer to be imidized contains an elastomeric phase.

10. Process according to anyone of the preceding claims, wherein the imidizing agent is a compound of general formula RHN-CO-NHR$'$, wherein R and R$'$, which are the same or different from each other, represent hydrogen, $NH_2$-CO- alkyl, cycloalkyl, aryl or heterocyclic groups, optionally substituted and having from 1 to 18 carbon atoms, and is particularly urea ($NH_2$-CO-$NH_2$), dimethylurea, ethylurea or biuret.

11. Process according to anyone of the preceding claims, wherein the imidization temperature ranges from 100$^\circ$ to 350$^\circ$ C, particularly from 120$^\circ$ to 280$^\circ$ C.

12. Process according to anyone of the preceding claims, wherein the catalyst is selected from Lewis acids, particularly $ZnCl_2$, $BF_3$, $AlCl_3$, $AlBr_3$, $SnCl_4$, $TiCl_4$, $SbCl_5$, $SbF_5$, triphenyl-boron and triphenoxy-boron, strong Broensted acids, showing a pK below 5 (preferably below 3), and salts of said strong Broensted acids, particularly hydrochloric, fluoroboric, fluorosulphonic, trifluoromethyl-sulphonic, benzene sulphonic and alkyl-benzene-sulphonic acids (having alkyl groups containing from 1 to 12 carbon atoms), ammonium or alkali metal salts of said acids, and mixtures thereof, and is preferably selected from $ZnCl_2$, $AlCl_3$, para-toluene-sulphonic acid, ammonium fluoroborate and ammonium chloride.

13. Catalytic process for imidizing a copolymer of maleic anhydride and styrene, and optionally other comonomers, containing from 10% to 50%, particularly from 20 to 50% by mols, of maleic anhydride, characterized in that the imidization is carried out by using urea ($NH_2$-CO-$NH_2$) as an imidizing agent and

6

(a) keeping the reaction mixture in the molten state or (b) working in an organic solvent, preferably selected from o-, m-, p-xylene, cyclohexanone and mixtures thereof, in the presence of from 0.01 to 10 mols of catalyst per 100 mols of anhydride groups present in the copolymer; and in that:

- the amount of urea is equal to or less than 250 mols (particularly from 50 to 100 mols) per 100 mols of anhydride groups;

- the catalyst is selected from zinc chloride, aluminum trichloride, ammonium fluoroborate, p-toluene-sulphonic acid and ammonium chloride.